# EUROPEAN PATENT SPECIFICATION

(11) **EP 4 513 432 B1**
(45) Date of publication and mention of the grant of the patent: **14.10.2026**
(21) Application number: 24709287.7
(22) Date of filing: 06.02.2024
(51) Int. Cl.: G06T 7/00, G01N 21/88, G06N 3/08

(54) **METHOD, APPARATUS AND DEVICE FOR DETECTING ELECTRODE POLE DEFECT OF LITHIUM BATTERY**
VERFAHREN, VORRICHTUNG UND VORRICHTUNG ZUR ERKENNUNG VON ELEKTRODENPOLDEFEKTEN EINER LITHIUMBATTERIE
PROCÉDÉ, APPAREIL ET DISPOSITIF DE DÉTECTION D'UN DÉFAUT DE PÔLE D'ÉLECTRODE D'UNE BATTERIE AU LITHIUM

(30) Priority: 29.06.2023 CN 202310778080
(43) Date of publication of application: 26.02.2025
(73) Proprietor: Xiamen Weiya Intelligent Technology Co., Ltd, Huli District Xiamen, Fujian 361000 (CN); Xiamen Vitu Software Technology Co., Ltd, Xiamen, Fujian 361000 (CN)
(72) Inventor: HE, JunLin, Xiamen, Fujian 361000 (CN); CHEN, Yu, Xiamen, Fujian 361000 (CN); LIAN, HaiYan, Xiamen, Fujian 361000 (CN)
(74) Representative: Chung, Hoi Kan
(86) International application number: PCT/CN2024/076284
(87) International publication number: WO 2025/001165

(56) References cited:
- CN-A- 113 379 703
- CN-A- 115 035 050
- CN-A- 115 131 359
- CN-A- 115 147 370
- CN-A- 115 147 370
- CN-A- 116 168 030
- CN-A- 116 309 576
- CN-A- 116 542 967
- US-A1- 2017 277 966
- YAN ZHONGGUANG, ZHIHONG YAN, WENHAN G U: "Weld Forming Quality Detection Based on Depth and Gray Images at Same Time and Same Position", HOT WORKING TECHNOLOGY, CN, vol. 50, no. 15, 1 January 2021 (2021-01-01), CN, XP093254129, ISSN: 1001-3814, DOI: 10.14158/j.cnki.1001-3814.20203151

## Description

### TECHNICAL FIELD

The present invention relates to the technical field of lithium batteries, and particularly relates to a method, apparatus and device for detecting a pole defect of a lithium battery.

### BACKGROUND

A lithium battery is a battery featuring a high energy density, a long service life and is environmental friendly, and is widely applied to the fields of mobile electronic devices, electric automobiles, energy storage systems and the like. Performance and safety of the lithium battery are closely related to its internal structure, and its pole is one of significant components of the lithium battery. Quality and defects of the pole directly affect the performance and safety of the lithium battery.

At present, detection of a pole defect of the lithium battery mainly adopts nondestructive detection techniques such as X-ray detection, magnetic powder inspection and ultrasonic detection. The X ray detection is a frequently used method which can detect defects and foreign matters in the pole, but it needs to be operated by technicians through professional devices, and has radiation hazards. The magnetic powder inspection and ultrasonic detection can detect defects on the surface of the pole and inside the pole, but it has a poor detection effect on small defects.

### SUMMARY

In view of this, an object of the present invention is to provide a method, apparatus and device for detecting a pole defect of a lithium battery, which aim to solve the problems that in the prior art, the demand on the devices and technicians for detecting the defect of the pole of the lithium battery is too high, the detection effect on some small defects is poor and the like.

To achieve the above object, the present invention provides a method for detecting a pole defect of a lithium battery, comprising:
acquiring a depth image and a 2D grayscale image of a pole, wherein the depth image and the 2D grayscale image are the same in size;
performing equalization processing on the depth image to obtain a first image;
performing filtering processing and edge detection on the first image to obtain a pole area;
positioning a detection position corresponding to the 2D grayscale image according to a coordinate point of an edge contour of the pole area, to obtain a detection area; and
detecting different types defect in the detection area by a preset defect detection algorithm, to obtain a defect detection result.

Preferably, the method further includes:
judging whether a defect size in a corresponding position in the defect detection result is greater than a detection threshold, and if the defect size in the corresponding position in the defect detection result is greater than the detection threshold, determining the defect as a true pole defect.

The method further includes: finding the corresponding position in the depth image according to the obtained defect position; calculating the defect size of the corresponding defect, including a length, a width and a depth of the defect; comparing the length, the width and the depth with corresponding thresholds of detection parameters; when the length, the width and the depth are greater than the corresponding thresholds, determining that there is the corresponding defect in the pole; and otherwise, considering that there is no corresponding defect.

Preferably, the method further includes: judging whether the defect is a true defect in combination with a concave-convex characteristic of the defect on the depth image and a gray feature of the defect in the 2D grayscale image.

Preferably, the method further includes: solving a depth value set on the depth image according to the obtained defect position; taking a minimum value as a depth value of a current defect; if judging that the defect size and the depth value both meet a user-defined defect specification, considering that there is the true defect.

Preferably, the performing filtering processing and edge detection on the first image to obtain a pole area includes:
performing mean filtering processing on the first image to obtain a second image; and
calculating the second image by using an edge detection operator to obtain an initial pole area;
performing closed operation and calculation of a contour coordinate on the initial pole area to determine a reference depth value of the pole;
selecting coordinate points meeting a preset range of the reference depth value in the first image, and using a set of all coordinate points as the pole area.

Preferably, the calculating the second image by using an edge detection operator to obtain an initial pole area includes:
calculating edge gradients in an X direction and a Y direction of the second image by using the edge detection operator to obtain edge gradient information;
extracting edge information in the first image according to the edge gradient information to obtain a third image with an edge gradient numerical value; and
performing binarization on the third image according to a preset gradient threshold to obtain the initial pole area.

Preferably, the performing closed operation and calculation of a contour coordinate on the initial pole area to determine a reference depth value of the pole includes:
performing closed operation on the initial pole area to obtain a first area;
calculating a circumscribed rectangular area of the first area and screening the contour coordinate of the pole area;
indenting the contour coordinate according to a preset distance to obtain a plurality of second areas; and
counting depth values of the plurality of second areas, and using a median in the depth values as the reference depth value.

Preferably, the detecting different types of defects in the detection area by a preset defect detection algorithm includes:
detecting a convex point type defect and a scratch type defect in the detection area through a detection model constructed based on YOLO; and
detecting a notch type defect in the detection area through a detection algorithm formed based on band-pass filtering and morphology.

Preferably, the detecting a notch type defect in the detection area through a detection algorithm formed based on band-pass filtering and morphology includes:
acquiring and shielding a position of an aluminum bar hole at a center of the pole to determine a first defect signal;
determining an appropriate cut-off frequency by band-pass filtering to filter out a high frequency portion and a low frequency portion in the first defect signal to obtain a second defect signal with a special frequency range; and
performing dilation and erosion operations on the second defect signal by morphology to obtain a position of a target defect.

To achieve the above object, the present invention further provides an apparatus for detecting a pole defect of a lithium battery, including:
an acquisition unit, configured to acquire a depth image and a 2D grayscale image of a pole, where the depth image and the 2D grayscale image are the same in size;
a first processing unit, configured to perform equalization processing on the depth image to obtain a first image;
a second processing unit, configured to perform filtering processing and edge detection on the first image to obtain a pole area;
a positioning unit, configured to position a detection position corresponding to the 2D grayscale image according to a coordinate point of an edge contour of the pole area, to obtain a detection area; and
a detection unit, configured to detect different types of defects in the detection area by a preset defect detection algorithm, to obtain a defect detection result.

To achieve the above object, the present invention further provides an apparatus for detecting a pole defect of a lithium battery, including a processor, a memory and a computer program stored in the memory, where the computer program, when executed by the processor, implements the steps of the method for detecting a pole defect of a lithium battery in the embodiments.

To achieve the above object, the present invention further provides a computer readable storage medium, having a computer program stored thereon, where the computer program, when executed by a processor, implements the steps of the method for detecting a pole defect of a lithium battery in the embodiments.

The present invention has the following beneficial effects:

In the above solution, different types of defects are detected by the preset defect detection algorithm, so that the detection efficiency can be improved optimally, the detection quality can be improved, and the detection speed can be guaranteed as well. By combining advantages of a conventional image algorithm and AI, the requirement on detection of the pole of the lithium battery can be met, and the quality detection requirement on detection of the pole of the lithium battery in the new energy industry is met.

In the above solution, by way of jointly judging the true defect by acquiring the depth image the 2D grayscale image of the battery pole, the defect is judged from multiple dimensions, which meets one defect defined various specifications of a user, meets the user demand to the maximum extent, and can reduce the misjudgment rate to a great extent.

In the above solution, the actual area of the pole is determined by solving the reference depth value of the pole, so that the peripheral interference information can be filtered, and the defect in the detection area is accurately positioned.

In the above solution, the defect is detected through images without a link of manual visual inspection, so that the human cost is greatly saved. Compared with judgment of the defect by human eyes, judgment on the defect in the solution has a quantized standard, so that there is no issue of varying quality of the produced products affected by subjective judgment of personnel, and therefore, the production quality of the products is guaranteed.

### BRIEF DESCRIPTION OF DRAWINGS

In order to describe the embodiments of the present invention or the technical scheme in the prior art more clearly, brief introduction on drawings needed to be used in the embodiment will be made below. It is obvious that the drawings described below are some embodiments of the present invention, and those skilled in the technical field further can obtain other drawings according to the drawings without making creative efforts.
FIG. 1 is a flow diagram of a method for detecting a pole defect of a lithium battery provided in an embodiment of the present invention.
FIG. 2 is a schematic structural diagram of an apparatus for detecting a pole defect of a lithium battery provided in an embodiment of the present invention.

Implementation, functional features and advantages of the objective of the present invention will be further described with reference to the drawings in combination with the embodiments.

### DESCRIPTION OF EMBODIMENTS

In order to make the objects, technical solutions, and advantages of the implementations of the present invention clearer, the technical solutions of the embodiments of the present invention will be described clearly and completely with reference to the drawings of the embodiments of the present invention. Apparently, the described implementations are a part of embodiments of the present invention rather than all the implementations. On the basis of the implementations in the present invention, all other implementations obtained by those of ordinary skill in the technical field without making creative efforts shall fall into the scope of protection of the present invention. Therefore, detailed description on the implementations of the application provided in the drawings is not intended to limit the scope of the present invention claimed, and merely represents selected implementations of the present invention. On the basis of the implementations in the present invention, all other implementations obtained by those of ordinary skill in the technical field without making creative efforts shall fall into the scope of protection of the present invention.

In the description of the present invention, it should be understood that the terms 'first' and 'second' are only used for a description purpose rather than being construed to indicate or imply relative importance or implicitly indicate the quantity of indicated technical features. Therefore, the features defined with "first" and "second" can explicitly or implicitly include one or more features.

The content of the present invention will be elaborated in detail below in combination with the embodiments.

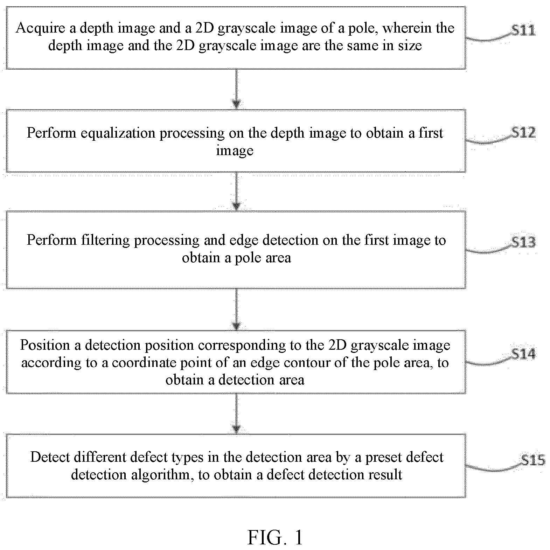

FIG. 1 is a flow diagram of a method for detecting a pole defect of a lithium battery provided in an embodiment of the present invention.

In the embodiment, the method includes:
S11: acquiring a depth image and a 2D grayscale image of a pole, wherein the depth image and the 2D grayscale image are the same in size.
S12: performing equalization processing on the depth image to obtain a first image,
where the performing equalization processing on the depth image includes equalization processing realized through a contrast limited adaptive histogram.

In the embodiment, by acquiring a group of depth images and 2D grayscale images consistent in size and performing equalization processing by using the contrast limited adaptive histogram, compared with common histogram equalization, contrast limited adaptive histogram equalization pays more attention to improving the local contrast, so that more details of the images are better reserved.

S13: performing filtering processing and edge detection on the first image to obtain a pole area.

Further, in the step S13, the performing filtering processing and edge detection on the first image to obtain a pole area includes:
S13-1: performing mean filtering processing on the first image to obtain a second image;
S13-2: calculating the second image by using an edge detection operator to obtain an initial pole area;
S13-3: performing closed operation and calculation of a contour coordinate on the initial pole area to determine a reference depth value of the pole; and
S13-4: selecting coordinate points meeting a preset range of the reference depth value in the first image, and using a set of all coordinate points as the pole area.

In the step S13-2, the calculating the second image by using an edge detection operator to obtain an initial pole area includes:
calculating edge gradients in an X direction and a Y direction of the second image by using the edge detection operator to obtain edge gradient information;
extracting edge information in the first image according to the edge gradient information to obtain a third image with an edge gradient numerical value; and
performing binarization on the third image according to a preset gradient threshold to obtain the initial pole area.

In the step S13-3, the performing closed operation and calculation of a contour coordinate on the initial pole area to determine a reference depth value of the pole includes:
performing closed operation on the initial pole area to obtain a first area;
calculating a circumscribed rectangular area of the first area and screening the contour coordinate of the pole area;
indenting the contour coordinate according to a preset distance to obtain a plurality of second areas; and
counting depth values of the plurality of second areas, and using a median in the depth values as the reference depth value.

In the embodiment, although the operation of the contrast limited adaptive histogram equalization on the depth image can enhance the local contrast, noise in the original image will also be amplified. Therefore, to further perform mean value filtering processing can play a role of inhibiting the noise, which is more beneficial for next processing of the image.

Because there has not only been the pole area, to position the pole area accurately, the depth image area is further divided by using the reference depth value standard. To solve the actual pole area, first, the substantial initial pole area is solved. The reason why the substantial initial pole area is only solved is that the edge of the pole directly solved cannot position the true pole area accurately due to edge blur, near surrounding objects and the like. The solved area may be bonded together with the surrounding objects. Therefore, in the embodiment, the substantial initial pole area is solved first.

Specifically, edge detection is performed first by using a Sobel operator which is a combination of Gaussian smoothing and differential operation, can meet a basic edge detection requirement and is high in efficiency. In the embodiment, edge gradient information in an X direction and a Y direction is solved by using the Sobel operator, and then the edge gradient information in the X direction and the Y direction is multiplied by 0.5 and is added to obtain final edge gradient information. The obtained image with the edge gradient information is subjected to binarization processing by using a preset gradient threshold to obtain an image only including 0 and 255 and edges. That is, the image is the image containing the edge gradient information. The value at each pixel point is a gradient value. The image is binarized by selecting an appropriate gradient threshold (that is, the pixel point higher the pixel position of the gradient threshold is set as 255 and the pixel point lower than the pixel position of the gradient threshold is set as 0). Through such an operation, the substantial initial pole area can be obtained.

When the pole area is solved, the edge only including the pole cannot be guaranteed. Edges of some other surrounding objects will also be solved as well. Therefore, all edge profiles need to be screened. In the embodiment, some small interference is removed through a corrosion operation in the morphological operation, and all edges are processed through closed operation to connect the disconnected positions at the edge so as to form a completely closed edge. Then, circumscribed rectangular areas of all profiles are calculated by using an existing profile operator in OpenCV, and the profile with the largest area is the profile of the needed pole area. The coordinates of the whole pole area can be known according to the coordinates of the profile. Areas of four poles are selected from upper, lower, left and right sides. The coordinates of the profile are indented for a certain distance. Areas of several poles are selected. The depth values of the areas are counted and sequenced, and a median is taken for further selecting the reference depth value. Specifically, the coordinate points are traversed from the upper, lower, left and right directions to the center and the pixel values of the current points are judged. If the coordinate points are 255, the areas are the pole areas. Otherwise, the areas are not the pole areas. After which points are the pole areas are determined, coordinate positions of the points in some areas are selected as which row and which column of the picture. Then the depth values at corresponding positions on the depth image are used as statistical data. After the statistical data is sequenced, the median is used as the reference depth value of the pole.

A depth value range is obtained through the reference depth value and a numerical value with a certain size deviation. The coordinate points meeting the requirement are screened on the depth image within the depth value range. A set of all points is the true pole area. Because the depth values of the whole pole plane are not possible completely consistent and there will be some subtle unevenness, there may be small numerical value deviations in terms of the depth value. Therefore, after the reference depth value is solved, the reference depth value is subtracted from a numerical value and is added with a numerical value to obtain a depth value range. The depth values in the range can be judged as the pole area. The depth value of each point on the depth value is judged based on the standard, to determine which points are in the true pole area. Therefore, the true pole area can be solved, so that the area needed to be detected is precisely positioned.

S14: positioning a detection position corresponding to the 2D grayscale image according to a coordinate point of an edge contour of the pole area, to obtain a detection area.

S15: detecting different types of defects in the detection area by a preset defect detection algorithm, to obtain a defect detection result.

Further, in the step S15, the detecting different types of defects in the detection area by a preset defect detection algorithm includes:
S15-1: detecting a convex point type defect and a scratch type defect in the detection area through a detection model constructed based on YOLO.

Further, a process of constructing the detection model constructed based on YOLO includes:
collecting a great number of images of the 2D grayscale image including defects in the convex point area and the scratch area and annotating the images, including the images and corresponding annotation information, that is, the positions and types of the defects, to obtain the training data set;
training the training data set with the detection model constructed by using YOLO, and updating model parameters through multiple-time iteration, where the model can better predict the target position and type, to obtain the detection model for defect detection;
evaluating a model effect with a validation set to ensure acquisition of a precision and a recall rate most suitably applied to current defect detection; and
applying the packaged model to actual pole defect detection to obtain positions of the convex point defect and the scratch defect.

S15-2: detecting a notch type defect in the detection area through a detection algorithm formed based on band-pass filtering and morphology.

In the step S15-1, the detecting a notch type defect in the detection area through a detection algorithm formed based on band-pass filtering and morphology includes:
acquiring and shielding a position of an aluminum bar hole at a center of the pole to determine a first defect signal;
determining an appropriate cut-off frequency by band-pass filtering to filter out a high frequency portion and a low frequency portion in the first defect signal to obtain a second defect signal with a special frequency range; and
performing dilation and erosion operations on the second defect signal by morphology to obtain a position of a target defect.

In the embodiment, because there will be an aluminum bar hole at the center of the pole, the part similar to the notch lies in a very close gray value. The condition will cause interference when the 2D grayscale image is used to detect the notch. To avoid post-treatment on misjudgment of the aluminum bar hole as the notch during defect detection, the position of the aluminum bar hole is found fist and then the area of the aluminum bar hole is shielded in the embodiment. According to the depth image and the reference depth value of the pole, the depth value of the aluminum bar hole can be determined to be lower than a certain numerical value. Therefore, the area of the aluminum bar hole is screened out, and areas are divided at corresponding positions of the 2D grayscale image. A mean gray value of the pole area is selected to replace the gray value of the area, and thus, the area is not judged as the defect during defect detection. Specifically, an appropriate cut-off frequency is selected by using band-pass filtering, high frequency components and low frequency components in the image signals are filtered, and signals within a special frequency range are only reserved. Thus, noise and interference can be removed, and moreover, the defect signals are highlighted, so that the defect signals are more apparent, manifested as highlighted areas in the image. Some interference is removed by dilation and erosion operations in morphology, and probable adhesion among the defects is disconnected, so that the defects are clearer. Circumscribed rectangles are further solved for the obtained defect points to obtain the position coordinates of the defects.

By performing mean filtering on the image with two filter kernels different in size, two filtered images can be obtained. The image obtained by subtracting the two images is equivalent to the effect after band-pass filtering (that is, band-pass filtering is manifested as an operation of removing high frequency signals and low frequency signals in the frequency domain). Noise and background will be filtered, and a notch portion is reserved. Because pixel distribution is impossible to achieve an expected ideal state, the solved notch in this case will be interfered, including a dark position at the edge, adhesion of the notches, adhesion of noisy points around the notch and the like. On this basis, morphological operations are used in the embodiment, including expansion, corrosion, opening operation and closed operation, to obtain the final notch profile.

Further, the method further includes:
judging whether a defect size in a corresponding position in the defect detection result is greater than a detection threshold, and if the defect size in the corresponding position in the defect detection result is greater than the detection threshold, determining the defect as a true pole defect.

Specifically, the method further includes: finding the corresponding position in the depth image according to the obtained defect position; calculating the defect size of the corresponding defect (including a length, a width and a depth of the defect); comparing the length, the width and the depth with corresponding thresholds of detection parameters; when the length, the width and the depth are greater than the corresponding thresholds, determining that there is the corresponding defect in the pole; and otherwise, considering that there is no corresponding defect.

Specifically, the method further includes: judging whether the defect is a true defect in combination with a concave-convex characteristic of the defect on the depth image and a gray feature of the defect in the 2D grayscale image. Because object positions in the depth image and the grayscale image are consistent, whether the current area meets the features of the defect on the depth image and the grayscale image is judged when whether the defect is a true defect is judged. The concave-convex feature of the defect is shown in the depth image that the depth value is less than or larger than the surrounding values, thereby judging which points are lower or higher than the pole surface. The gray feature of the defect is shown in the grayscale image that the pixel value is different from the surrounding pixel points, and the gray value is usually small. Only when the two images have the features of the defect, can it be judged as the true defect. Therefore, welding ash falling above (the portion is similar to the defect in the grayscale image) may be further eliminated in an actual production process by calculating the size of the defect, so as to obtain a more exact true defect.

A depth value set is solved on the depth image according to the obtained defect position; a minimum value is taken as a depth value of a current defect; if it is judged that the defect size and the depth value both meet a user-defined defect specification, it is considered that there is the true defect. Therefore, the embodiment realizes precise measurement of the defect data and judgment of the true defect, and can improve the recognition accuracy of the defect.

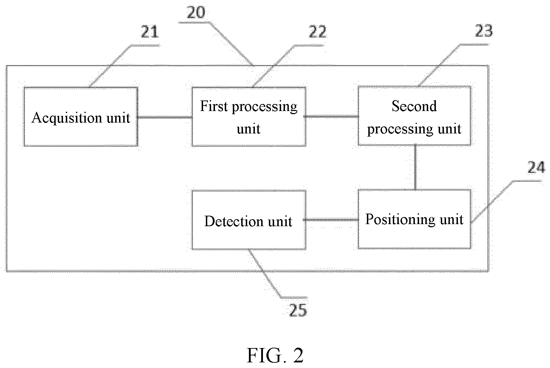

FIG. 2 is a schematic structural diagram of an apparatus for detecting a pole defect of a lithium battery provided in an embodiment of the present invention.

In the embodiment, the apparatus 20 includes:
an acquisition unit 21, configured to acquire a depth image and a 2D grayscale image of a pole, where the depth image and the 2D grayscale image are the same in size;
a first processing unit 22, configured to perform equalization processing on the depth image to obtain a first image;
a second processing unit 23, configured to perform filtering processing and edge detection on the first image to obtain a pole area;
a positioning unit 24, configured to position a detection position corresponding to the 2D grayscale image according to a coordinate point of an edge contour of the pole area, to obtain a detection area; and
a detection unit 25, configured to detect different types of defects in the detection area by a preset defect detection algorithm, to obtain a defect detection result.

In another embodiment, the apparatus 20 further includes:
a determination unit, configured to judge whether a defect size in a corresponding position in the defect detection result is greater than a detection threshold, and if the defect size in the corresponding position in the defect detection result is greater than the detection threshold, determine the defect as a true pole defect.

Each unit module of the apparatus 20 executes the corresponding steps in the method embodiment. therefore, each unit module is not described repeatedly herein, referring to description of corresponding steps above for detail.

The embodiment of the present invention further provides a device, including the apparatus for detecting a pole defect of a lithium battery, where the apparatus for detecting a pole defect of a lithium battery can be of the structure in the embodiment shown in FIG. 2. The apparatus can execute the technical solution in the method embodiment shown in FIG. 1 correspondingly. Its principle of realization and technical effect are similar to those of the apparatus, referring to related records in the above embodiment for detail, which is not repeatedly described herein.

The device includes: devices with a photographing function such as a mobile phone, a digital camera or a tablet personal computer or a device with an image processing function or a device with an image display function. The device can include components such as a memory, a processor, an input unit, a display unit and a power supply.

The memory can be used to store a software program and a module, and the processor executes various function applications and data processing by running the software program and the module stored on the memory. The memory mainly includes a program storage area and a data storage area, where the program storage area can store an operating system, an application needed by at least one function (for example, an image play function) and the like, and the data storage area can store data constructed according to use of the device. In addition, the memory can include a high speed random access memory and may further include a nonvolatile memory, for example, at least one disk memory device, a flash memory device or other volatile solid memory devices. Correspondingly, the memory can further include a memory controller to provide access to the memory by the processor and the input unit.

The input apparatus can be used to receive inputted figure or character or image information and generates keyboard, mouse, operating rod, optical or trackball signal inputs related to user settings and function control. Specifically, besides a camera, the input unit in the embodiment can further include a touch sensitive surface (for example, a touch display screen) and other input devices.

The display unit can be used to display information inputted by the user or information provided to the user and various graphical user interfaces of the device. The graphical user interfaces can be formed by graphics, texts, icons, videos and any combination thereof. The display unit can include a display panel. Optionally, the display unit can be configured in form of a liquid crystal display (LCD), an organic light-emitting diode (OLED) and the like. Further, the touch sensitive surface can cover the display panel. When a touch operation on the touch sensitive surface or near the touch sensitive surface is detected by the touch sensitive surface, the touch sensitive surface transfers the touch operation to the processor to determine the type of a touch event, and then the processor provides a corresponding visual output on the display panel according to the type of the touch event.

The present invention further provides a computer readable storage medium which can be the computer readable storage medium included in the memory in the embodiment or the computer readable storage medium which exists independently and is not assembled in the electronic device. The computer readable storage medium has at least one instruction which is loaded and executed by the processor to execute the method for detecting a pole defect of a lithium battery shown in FIG. 1. The readable storage medium can be a read-only memory, a magnetic disc or an optical disc.

It is to be noted that each embodiment of the description is described in a progressive manner, each embodiment focuses on differences from other embodiments, and the same and similar parts between the embodiments may refer to each other. As far as the apparatus embodiment, the device embodiment and the storage medium embodiment are concerned, as the embodiments are substantially similar to the method embodiment, the embodiments are described simply. The related part refers to description of the embodiment of the method.

Furthermore, the terms "comprising", "including" or any other variants herein are intended to cover the non-exclusive including, thereby making that the process, method, object or apparatus comprising a series of elements comprise not only those elements but also other elements that are not listed explicitly or the inherent elements to the process, method, merchandise or apparatus. Under a circumstance of no more limitations, for the elements defined by the term "include one", a condition that there are additional same elements in the process, method, article or apparatus including the elements is not excluded.

The above description illustrates and describes the preferred embodiments of the present invention. It shall be understood that the present invention is not limited to the form disclosed herein, shall not be regarded as exclusion of other embodiments, can be used in various other combinations, modifications and environments, and can be altered through the above teaching or techniques or knowledge in related art within a scope of conception of the present invention. Modifications and variations made by those skilled in the art without departing from the scope of the present invention shall all fall within the scope of protection of the appended claims of the present invention.

## Claims

1. A method for detecting a pole defect of a lithium battery, comprising:
acquiring a depth image and a 2D grayscale image of a pole, wherein the depth image and the 2D grayscale image are the same in size;
performing equalization processing on the depth image by using a contrast limited adaptive histogram to obtain a first image;
performing filtering processing and edge detection on the first image to obtain a pole area, comprising:
performing mean filtering processing on the first image to obtain a second image; and
calculating the second image by using a Sobel edge detection operator to obtain an initial pole area;
performing closed operation on the initial pole area and calculation of a contour coordinate to determine a reference depth value of the pole, comprising:
performing closed operation on the initial pole area to obtain a first area;
calculating a circumscribed rectangular area of the first area and screening the contour coordinate of the pole area;
indenting the contour coordinate according to a preset distance to obtain a plurality of second areas;
counting depth values of the plurality of second areas, and using a median in the depth values as the reference depth value; and
selecting coordinate points meeting a preset range of the reference depth value in the first image, and using a set of all coordinate points as the pole area;
positioning a detection position corresponding to the 2D grayscale image according to a coordinate point of an edge contour of the pole area, to obtain a detection area; and
detecting different types of defects in the detection area by a preset defect detection algorithm, to obtain a defect detection result, comprising:
detecting a convex point type defect and a scratch type defect in the detection area through a detection model constructed based on YOLO; and
detecting a notch type defect in the detection area through a detection algorithm formed based on band-pass filtering and morphology.

2. The method for detecting a pole defect of a lithium battery according to claim 1, further comprising:
judging whether a defect size of a defect in a corresponding position in the defect detection result is greater than a detection threshold, and if the defect size in the corresponding position in the defect detection result is greater than the detection threshold, determining the defect as a true pole defect.

3. The method for detecting a pole defect of a lithium battery according to claim 2, further comprising: finding the corresponding position in the depth image according to the obtained defect position; calculating the defect size of the corresponding defect, comprising a length, a width and a depth of the defect; comparing the length, the width and the depth with corresponding thresholds of detection parameters; when the length, the width and the depth are greater than the corresponding thresholds, determining that there is the corresponding defect in the pole; and otherwise, considering that there is no corresponding defect.

4. The method for detecting a pole defect of a lithium battery according to claim 3, further comprising: judging whether the defect is a true defect in combination with a concave-convex characteristic of the defect on the depth image and a gray feature of the defect in the 2D grayscale image.

5. The method for detecting a pole defect of a lithium battery according to claim 4, further comprising: solving a depth value set on the depth image according to the obtained defect position; taking a minimum value as a depth value of a current defect; if judging that the defect size and the depth value both meet a user-defined defect specification, considering that there is the true defect.

6. The method for detecting a pole defect of a lithium battery according to claim 1, wherein the calculating the second image by using a Sobel edge detection operator to obtain an initial pole area comprises:
calculating edge gradients in an X direction and a Y direction of the second image by using the edge detection operator to obtain edge gradient information; and
extracting edge information in the first image according to the edge gradient information to obtain a third image with an edge gradient numerical value; and
performing binarization on the third image according to a preset gradient threshold to obtain the initial pole area.

7. The method for detecting a pole defect of a lithium battery according to claim 1, wherein the detecting a notch type defect in the detection area through a detection algorithm formed based on band-pass filtering and morphology comprises:
acquiring and shielding a position of an aluminum bar hole at a center of the pole to determine a first defect signal;
determining an appropriate cut-off frequency by band-pass filtering to filter out a high frequency portion and a low frequency portion in the first defect signal to obtain a second defect signal with a special frequency range; and
performing dilation and erosion operations on the second defect signal by morphology to obtain a position of a target defect.

8. An apparatus for detecting a pole defect of a lithium battery, comprising:
an acquisition unit, configured to acquire a depth image and a 2D grayscale image of a pole, wherein the depth image and the 2D grayscale image are the same in size;
a first processing unit, configured to perform equalization processing on the depth image by using a contrast limited adaptive histogram to obtain a first image; and
a second processing unit, configured to perform filtering processing and edge detection on the first image to obtain a pole area, comprising:
a positioning unit, configured to position a detection position corresponding to the 2D grayscale image according to a coordinate point of an edge contour of the pole area, to obtain a detection area; and
a detection unit, configured to detect different types of defects in the detection area by a preset defect detection algorithm, to obtain a defect detection result.

9. A computer readable storage medium comprising a computer program stored, wherein the computer program, when executed by a processor of an apparatus according to claim 8, implements the steps of the method for detecting a pole defect of a lithium battery according to any one of claims 1-7.

## Patentansprüche

1. Verfahren zur Erkennung eines Poldefekts einer Lithiumbatterie, umfassend:
Erfassen eines Tiefenbilds und eines 2D-Graustufenbilds eines Pols, wobei das Tiefenbild und das 2D-Graustufenbild die gleiche Größe aufweisen;
Durchführen einer Entzerrungsverarbeitung an dem Tiefenbild unter Verwendung eines kontrastbegrenzten adaptiven Histogramms, um ein erstes Bild zu erhalten;
Durchführen einer Filterverarbeitung und Kantenerkennung an dem ersten Bild, um einen Polbereich zu erhalten, umfassend:
Durchführen einer Mittelwertfilterverarbeitung an dem ersten Bild, um ein zweites Bild zu erhalten; und
Berechnen des zweiten Bilds unter Verwendung eines Sobel-Kantendetektionsoperators, um einen anfänglichen Polbereich zu erhalten;
Durchführen einer morphologischen Schließung an dem anfänglichen Polbereich und Berechnen einer Konturkoordinate, um einen Referenztiefenwert des Pols zu bestimmen, umfassend:
Durchführen einer morphologischen Schließung an dem anfänglichen Polbereich, um einen ersten Bereich zu erhalten;
Berechnen eines umschriebenen rechteckigen Bereichs des ersten Bereichs und Filtern der Konturkoordinate des Polbereichs;
Einrücken der Konturkoordinate gemäß einem vorgegebenen Abstand, um eine Mehrzahl von zweiten Bereichen zu erhalten;
Zählen von Tiefenwerten der Mehrzahl von zweiten Bereichen und Verwenden eines Medians der Tiefenwerte als den Referenztiefenwert; und
Auswählen von Koordinatenpunkten, die einen vorgegebenen Bereich des Referenztiefenwerts in dem ersten Bild erfüllen, und Verwenden einer Menge aller Koordinatenpunkte als den Polbereich;
Positionieren einer dem 2D-Graustufenbild entsprechenden Detektionsposition gemäß einem Koordinatenpunkt einer Randkontur des Polbereichs, um einen Detektionsbereich zu erhalten; und
Detektieren verschiedener Defektarten in dem Detektionsbereich durch einen vorgegebenen Defekterkennungsalgorithmus, um ein Defekterkennungsergebnis zu erhalten, umfassend:
Detektieren einer Defektart vom Höckertyp und einer Defektart vom Kratzertyp in dem Detektionsbereich durch ein auf YOLO basierend aufgebautes Detektionsmodell; und
Detektieren einer Defektart vom Kerbtyp in dem Detektionsbereich durch einen auf Bandpassfilterung und Morphologie basierenden Erkennungsalgorithmus.

2. Verfahren zur Erkennung eines Poldefekts einer Lithiumbatterie nach Anspruch 1, ferner umfassend:
Beurteilen, ob eine Defektgröße eines Defekts an einer entsprechenden Position in dem Defekterkennungsergebnis größer als ein Detektionsschwellwert ist, und wenn die Defektgröße an der entsprechenden Position in dem Defekterkennungsergebnis größer als der Detektionsschwellwert ist, Bestimmen des Defekts als einen echten Poldefekt.

3. Verfahren zur Erkennung eines Poldefekts einer Lithiumbatterie nach Anspruch 2, ferner umfassend: Auffinden der entsprechenden Position in dem Tiefenbild gemäß der erhaltenen Defektposition; Berechnen der Defektgröße des entsprechenden Defekts, umfassend eine Länge, eine Breite und eine Tiefe des Defekts; Vergleichen der Länge, der Breite und der Tiefe mit entsprechenden Schwellwerten von Detektionsparametern; wenn die Länge, die Breite und die Tiefe größer als die entsprechenden Schwellwerte sind, Bestimmen, dass der entsprechende Defekt in dem Pol vorhanden ist; andernfalls Betrachten, dass kein entsprechender Defekt vorhanden ist.

4. Verfahren zur Erkennung eines Poldefekts einer Lithiumbatterie nach Anspruch 3, ferner umfassend: Beurteilen, ob der Defekt ein echter Defekt ist, in Kombination mit einer konkavkonvexen Charakteristik des Defekts auf dem Tiefenbild und einem Graumerkmal des Defekts in dem 2D-Graustufenbild.

5. Verfahren zur Erkennung eines Poldefekts einer Lithiumbatterie nach Anspruch 4, ferner umfassend: Lösen einer Tiefenwertmenge auf dem Tiefenbild gemäß der erhaltenen Defektposition; Nehmen eines Minimalwerts als einen Tiefenwert des aktuellen Defekts; wenn beurteilt wird, dass sowohl die Defektgröße als auch der Tiefenwert eine benutzerdefinierte Defektspezifikation erfüllen, Betrachten, dass der echte Defekt vorhanden ist.

6. Verfahren zur Erkennung eines Poldefekts einer Lithiumbatterie nach Anspruch 1, wobei das Berechnen des zweiten Bilds unter Verwendung eines Sobel-Kantendetektionsoperators, um einen anfänglichen Polbereich zu erhalten, umfasst:
Berechnen von Kantengradienten in einer X-Richtung und einer Y-Richtung des zweiten Bilds unter Verwendung des Kantendetektionsoperators, um Kantengradienteninformationen zu erhalten; und
Extrahieren von Kanteninformationen in dem ersten Bild gemäß den Kantengradienteninformationen, um ein drittes Bild mit einem Kantengradientennumerischen Wert zu erhalten; und
Durchführen einer Binarisierung an dem dritten Bild gemäß einem vorgegebenen Gradientenschwellwert, um den anfänglichen Polbereich zu erhalten.

7. Verfahren zur Erkennung eines Poldefekts einer Lithiumbatterie nach Anspruch 1, wobei das Detektieren einer Defektart vom Kerbtyp in dem Detektionsbereich durch einen auf Bandpassfilterung und Morphologie basierenden Erkennungsalgorithmus umfasst:
Erfassen und Ausblenden einer Position eines Aluminium-Stabloche in einer Mitte des Pols, um ein erstes Defektsignal zu bestimmen;
Bestimmen einer geeigneten Grenzfrequenz durch Bandpassfilterung, um einen Hochfrequenzanteil und einen Niederfrequenzanteil in dem ersten Defektsignal auszufiltern, um ein zweites Defektsignal mit einem speziellen Frequenzbereich zu erhalten; und
Durchführen von Dilatations- und Erosionsoperationen an dem zweiten Defektsignal durch Morphologie, um eine Position eines Zieldefekts zu erhalten.

8. Vorrichtung zur Erkennung eines Poldefekts einer Lithiumbatterie, umfassend:
eine Erfassungseinheit, die dazu eingerichtet ist, ein Tiefenbild und ein 2D-Graustufenbild eines Pols zu erfassen, wobei das Tiefenbild und das 2D-Graustufenbild die gleiche Größe aufweisen;
eine erste Verarbeitungseinheit, die dazu eingerichtet ist, an dem Tiefenbild unter Verwendung eines kontrastbegrenzten adaptiven Histogramms eine Entzerrungsverarbeitung durchzuführen, um ein erstes Bild zu erhalten; und
eine zweite Verarbeitungseinheit, die dazu eingerichtet ist, an dem ersten Bild eine Filterverarbeitung und Kantenerkennung durchzuführen, um einen Polbereich zu erhalten, umfassend:
eine Positionierungseinheit, die dazu eingerichtet ist, eine dem 2D-Graustufenbild entsprechende Detektionsposition gemäß einem Koordinatenpunkt einer Randkontur des Polbereichs zu positionieren, um einen Detektionsbereich zu erhalten; und
eine Detektionseinheit, die dazu eingerichtet ist, verschiedene Defektarten in dem Detektionsbereich durch einen vorgegebenen Defekterkennungsalgorithmus zu detektieren, um ein Defekterkennungsergebnis zu erhalten.

9. Vorrichtung (oder Gerät) zur Erkennung eines Poldefekts einer Lithiumbatterie, umfassend einen Prozessor, einen Speicher und ein in dem Speicher gespeichertes Computerprogramm, wobei das Computerprogramm, wenn es von dem Prozessor ausgeführt wird, die Schritte des Verfahrens zur Erkennung eines Poldefekts einer Lithiumbatterie nach einem der Ansprüche 1 bis 7 implementiert.

## Revendications

1. Procédé de détection d'un défaut de pôle d'une batterie au lithium, comprenant :
l'acquisition d'une image de profondeur et d'une image en niveaux de gris 2D d'un pôle, lesdites image de profondeur et image en niveaux de gris 2D ayant la même taille ;
la réalisation d'un traitement d'égalisation sur l'image de profondeur à l'aide d'un histogramme adaptatif à contraste limité pour obtenir une première image ;
la réalisation d'un traitement de filtrage et d'une détection de contours sur la première image pour obtenir une zone de pôle, comprenant :
la réalisation d'un traitement de filtrage moyenneur sur la première image pour obtenir une deuxième image ; et
le calcul de la deuxième image à l'aide d'un opérateur de détection de contours de Sobel pour obtenir une zone de pôle initiale ;
la réalisation d'une opération de fermeture morphologique sur la zone de pôle initiale et le calcul d'une coordonnée de contour pour déterminer une valeur de profondeur de référence du pôle, comprenant :
la réalisation d'une opération de fermeture morphologique sur la zone de pôle initiale pour obtenir une première zone ;
le calcul d'une zone rectangulaire circonscrite de la première zone et le filtrage de la coordonnée de contour de la zone de pôle ;
le retrait de la coordonnée de contour selon une distance prédéfinie pour obtenir une pluralité de deuxièmes zones ;
le comptage des valeurs de profondeur de la pluralité de deuxièmes zones, et l'utilisation d'une médiane des valeurs de profondeur comme valeur de profondeur de référence ; et
la sélection des points de coordonnées satisfaisant une plage prédéfinie de la valeur de profondeur de référence dans la première image, et l'utilisation d'un ensemble de tous les points de coordonnées comme zone de pôle ;
le positionnement d'une position de détection correspondant à l'image en niveaux de gris 2D selon un point de coordonnée d'un contour de bord de la zone de pôle, pour obtenir une zone de détection ; et
la détection de différents types de défauts dans la zone de détection par un algorithme de détection de défauts prédéfini, pour obtenir un résultat de détection de défauts, comprenant :
la détection d'un type de défaut par point saillant et d'un type de défaut par rayure dans la zone de détection via un modèle de détection construit sur la base de YOLO ; et
la détection d'un type de défaut par entaille dans la zone de détection via un algorithme de détection formé sur la base d'un filtrage passe-bande et de la morphologie.

2. Procédé de détection d'un défaut de pôle d'une batterie au lithium selon la revendication 1, comprenant en outre :
le fait de juger si une taille de défaut d'un défaut à une position correspondante dans le résultat de détection de défauts est supérieure à un seuil de détection, et si la taille de défaut à la position correspondante dans le résultat de détection de défauts est supérieure au seuil de détection, déterminer le défaut comme étant un véritable défaut de pôle.

3. Procédé de détection d'un défaut de pôle d'une batterie au lithium selon la revendication 2, comprenant en outre : trouver la position correspondante dans l'image de profondeur en fonction de la position de défaut obtenue ; calculer la taille du défaut correspondant, comprenant une longueur, une largeur et une profondeur du défaut ; comparer la longueur, la largeur et la profondeur avec des seuils correspondants de paramètres de détection ; lorsque la longueur, la largeur et la profondeur sont supérieures aux seuils correspondants, déterminer que le défaut correspondant est présent dans le pôle ; sinon, considérer qu'aucun défaut correspondant n'est présent.

4. Procédé de détection d'un défaut de pôle d'une batterie au lithium selon la revendication 3, comprenant en outre : juger si le défaut est un véritable défaut en combinant une caractéristique de concavité/convexité du défaut sur l'image de profondeur et une caractéristique de niveau de gris du défaut dans l'image en niveaux de gris 2D.

5. Procédé de détection d'un défaut de pôle d'une batterie au lithium selon la revendication 4, comprenant en outre : résoudre un ensemble de valeurs de profondeur sur l'image de profondeur en fonction de la position de défaut obtenue ; prendre une valeur minimale comme valeur de profondeur du défaut actuel ; si l'on juge que la taille du défaut et la valeur de profondeur satisfont toutes deux à une spécification de défaut définie par l'utilisateur, considérer que le véritable défaut est présent.

6. Procédé de détection d'un défaut de pôle d'une batterie au lithium selon la revendication 1, dans lequel le calcul de la deuxième image à l'aide d'un opérateur de détection de contours de Sobel pour obtenir une zone de pôle initiale comprend :
le calcul des gradients de bord dans une direction X et une direction Y de la deuxième image à l'aide de l'opérateur de détection de contours pour obtenir des informations de gradient de bord ; et
l'extraction d'informations de bord dans la première image en fonction des informations de gradient de bord pour obtenir une troisième image avec une valeur numérique de gradient de bord ; et
la réalisation d'une binarisation sur la troisième image selon un seuil de gradient prédéfini pour obtenir la zone de pôle initiale.

7. Procédé de détection d'un défaut de pôle d'une batterie au lithium selon la revendication 1, dans lequel la détection d'un type de défaut par entaille dans la zone de détection via un algorithme de détection formé sur la base d'un filtrage passe-bande et de la morphologie comprend :
l'acquisition et le masquage d'une position d'un trou de barre en aluminium au centre du pôle pour déterminer un premier signal de défaut ;
la détermination d'une fréquence de coupure appropriée par filtrage passe-bande pour filtrer une partie haute fréquence et une partie basse fréquence dans le premier signal de défaut afin d'obtenir un deuxième signal de défaut avec une plage de fréquences spécifique ; et
la réalisation d'opérations de dilatation et d'érosion sur le deuxième signal de défaut par morphologie pour obtenir une position d'un défaut cible.

8. Appareil de détection d'un défaut de pôle d'une batterie au lithium, comprenant :
une unité d'acquisition, configurée pour acquérir une image de profondeur et une image en niveaux de gris 2D d'un pôle, lesdites image de profondeur et image en niveaux de gris 2D ayant la même taille ;
une première unité de traitement, configurée pour réaliser un traitement d'égalisation sur l'image de profondeur à l'aide d'un histogramme adaptatif à contraste limité pour obtenir une première image ; et
une deuxième unité de traitement, configurée pour réaliser un traitement de filtrage et une détection de contours sur la première image pour obtenir une zone de pôle, comprenant :
une unité de positionnement, configurée pour positionner une position de détection correspondant à l'image en niveaux de gris 2D selon un point de coordonnée d'un contour de bord de la zone de pôle, pour obtenir une zone de détection ; et
une unité de détection, configurée pour détecter différents types de défauts dans la zone de détection par un algorithme de détection de défauts prédéfini, pour obtenir un résultat de détection de défauts.

9. Dispositif (ou appareil) de détection d'un défaut de pôle d'une batterie au lithium, comprenant un processeur, une mémoire et un programme informatique stocké dans la mémoire, ledit programme informatique, lorsqu'il est exécuté par le processeur, mettant en œuvre les étapes du procédé de détection d'un défaut de pôle d'une batterie au lithium selon l'une quelconque des revendications 1 à 7.
